# EUROPEAN PATENT APPLICATION

(11) **EP 3 778 419 A1**
(43) Date of publication of application: **17.02.2021**
(21) Application number: 19777910.1
(22) Date of filing: 26.03.2019
(51) Int. Cl.: B65D 65/02, B32B 27/00, B32B 33/00, C08L 23/00, C08L 33/16, C08L 67/00, C08L 83/08, C08L 101/00

(54) **PACKAGING MEMBER HAVING SURFACE WITH EXCELLENT LIQUID REPELLENCY**

(30) Priority: 27.03.2018 JP 2018060393
(71) Applicant: Toyo Seikan Group Holdings, Ltd., Shinagawa-ku Tokyo 141-8627 (JP)
(72) Inventor: AOYA, Masaki, Yokohama-shi, Kanagawa 240-0062 (JP); OONUKI, Ryuuji, Yokohama-shi, Kanagawa 240-0062 (JP); KUNINORI, Masahiro, Yokohama-shi, Kanagawa 240-0062 (JP); KIMURA, Satoo, Yokohama-shi, Kanagawa 240-0062 (JP); IWASAKI, Tsutomu, Yokohama-shi, Kanagawa 240-0062 (JP)
(74) Representative: J A Kemp LLP
(86) International application number: PCT/JP2019/012841
(87) International publication number: WO 2019/189172

(57) **Abstract**

A packing member which effectively prevents the liquid repellent material from peeling off the surface and which is provided with the surface excellent in liquid repellency without the need of executing any particular means such as surface-roughening work, treatment with a plasma or vapor deposition. The packing member is characterized by having a surface layer of a blend of a base material polymer mixed with a fluorine-containing polymer, the surface layer forming a gradient of fluorine atom concentration in which fluorine atoms are more distributed in the surface than in the interior.

## Description

### Technical Field:

This invention relates to a packing member having surface excellent in liquid repellency.

### Background Art:

Plastics, in general, are easy to form as compared to glasses and metals, can be easily formed into various shapes, and have, therefore, been used for a variety of applications. Among them, the field of packing using containers or bottles and caps fitted to the containers, is a representative field where the plastics find their use to most of their extent.

Here, the containers that contain liquid are inevitably accompanied such problems as dripping of liquid and adhesion of liquid. Therefore, it has been desired that the liquid be smoothly drained out of the container without being left therein and without permitting the liquid to drip down along the outer wall surface of the mouth portion of the container.

Not being limited to the containers only, furthermore, the same properties are also required even for the packing members put to the use where they come in contact with the liquid, such as ejection fittings like spout as well as such uses as nozzles, pipettes, dispensers, etc.

The liquid dripping and liquid adhesion can be prevented by imparting liquid repellency to the surfaces of the plastic formed bodies to improve slipperiness to the liquid. As means for improving repellency to the liquid, patent documents 1 to 3 are proposing means of coating the surfaces of the formed bodies with a fluorine-containing resin such as polytetrafluoroethylene, means for rendering the surfaces to be rough, and like means.

Moreover, a patent document 4 proposes a vapor-deposited container provided with a base member of a synthetic resin, one surface of the base member being treated by a plasma etching, and with a fluorine-containing film of a fluorine compound that is carried on the treated surface by being deposited thereon.

As described above, means for making the fluorine-containing resin present in the surface of the formed body is to impart liquid-repellency to the surface by using the fluorine-containing resin, and has heretofore been widely used. The above means, however, is accompanied by such a problem that the fluorine-containing resin easily peels off since adhesiveness is poor between the fluorine-containing resin and the surface of the underlying base material. This also holds true when a film of a fluorine compound is formed by vapor deposition.

According to the means that renders the surface to be rough, on the other hand, a pneumatic layer is made present between the liquid that flows on the surface and the surface of the base member. Namely, by utilizing the fact that the air exhibits the highest liquid repellency, excellent liquid repellency is expressed by the surface of the formed body. Moreover, forming a coating of the fluorine-containing resin on the roughened surface suppresses the removal of the coating of the fluorine-containing resin from the surface. However, a considerably clumsy working (e.g., etching treatment) is required for roughening the surface causing an increase in the cost. Moreover, it becomes difficult to roughen the surface depending on the surface state of the formed body. There has also been known a method of roughening the formed surface by blending the resin with inorganic fine particles such as of silica or the like and forming the resin that is blended with the inorganic fine particles. According to this method, however, the surface is unevenly roughened to a large extent and, therefore, the degree of liquid repellency differs depending on the portions on the surface of the formed body. Moreover, limitation is imposed on the degree of roughening the surface, and it is difficult to secure a large degree of liquid repellency.

Further, a patent document 5 is a patent application filed by the present applicant and discloses a means of imparting liquid repellency to the surface of a plastic formed body by treating the surface of the formed body with a fluorine plasma. According to this means, liquid repellency is imparted not by providing a fluorine-containing resin on the surface of the formed body but by introducing fluorine atoms into a polymer that forms the surface of the formed body, effectively avoiding the problem in that the fluorine-containing resin peels off. Besides, the surface of the formed body is roughened by etching through the treatment with the fluorine plasma and, accordingly, is imparted with a very high degree of liquid repellency.

However, the above means requires a very expensive apparatus for executing the treatment with the fluorine plasma after the plastic material has been formed. Besides, the treatment must be executed batchwise leaving problems in regard to the cost of production and efficiency of production.

Moreover, a patent document 6 proposes a core/sheath type composite fiber in which a core component is made from a thermoplastic resin and a sheath component is made from a thermoplastic resin containing a fluorine type copolymer, the composite fiber having been heat-treated at a temperature of 160 to 200°C after it was melt-spun, drawn and taken-up. The composite fiber has the fluorine type copolymer distributed on the surface thereof and features excellent water repellency, oil repellency and anti-fouling property. That is, according to the patent document 6, the heat treatment is executed for about 15 seconds to about 5 minutes at a temperature of 160°C to 200°C letting the bonds of the fluorine type copolymer to undergo thermal molecular motion making it, therefore, possible to improve water repellency, oil repellency and anti-fouling property.

However, the above means is limited to the use for fibers only, but cannot be adapted to the use as packing members such as containers and lids. The present inventors have attempted to confirm it by conducting experiments; i.e., the inventors have attempted to treat a multi-layered film including a surface layer of an olefin resin containing a fluorine type copolymer with heat at a temperature of 160 to 200°C for 3 minutes. The inventors, however, have found that the multi-layered film was thermally deformed, and the sheet contracted greatly. Therefore, the multi-layered film could not be evaluated for its water repellency or liquid repellency.

### Prior Art Documents:

### Patent Documents:

Patent document 1: Japanese Patent No. 3358131
Patent document 2: Japanese Patent Laid-Open No. 2014-65175
Patent document 3: Japanese Patent No. 5807692
Patent document 4: Japanese Patent No. 6076197
Patent document 5: Japanese Patent Laid-Open No. 2016-88947
Patent document 6: Japanese Patent Laid-Open No. 2000-96348

### Outline of the Invention:

### Problems that the Invention is to Solve:

It is, therefore, an object of the present invention to provide a packing member which effectively prevents the liquid repellent material from peeling off the surface and which is provided with the surface excellent in liquid repellency without the need of executing any particular means such as surface-roughening work, treatment with a plasma or vapor deposition.

### Means for Solving the Problems:

According to the present invention, there is provided a packing member having a liquid repellent surface characterized by having a surface layer of a blend of a base material polymer mixed with a fluorine-containing polymer, the surface layer forming a gradient of fluorine atom concentration in which fluorine atoms are more distributed in the surface than in the interior.

In the packing member of the present invention, it is desired that:
(1) The surface shows a water repellency of not less than 105 degrees in terms of the water contact angle;
(2) The surface is a smooth surface having an arithmetic mean surface roughness (Ra) of not more than 10 *µ*m;
(3) The fluorine-containing polymer is a fluorine-containing acrylic resin or a fluorine-containing silicone resin;
(4) The base material polymer is a polyolefin or a polyester;
(5) The blend contains the fluorine-containing polymer in an amount of 0.01 to 50 parts by mass per 100 parts by mass of the base material polymer; and
(6) The surface layer of the blend has a layer-laminated structure formed on at least one surface of the underlying base material.

According to the present invention, there is, further, provided a method of producing a packing member having a liquid repellent surface, characterized by using a blend of a base material polymer mixed with a fluorine-containing polymer to obtain a packing member whose surface is made of the blend and, thereafter, subjecting the surface of the packing member to a migration treatment in which the surface of the packing member is held at a temperature of not lower than 30°C but lower than 160°C for not shorter than one second.

### Effects of the Invention:

The packing member of the present invention basically has a surface layer of a blend of a base material polymer mixed with a fluorine-containing polymer. In addition to this basic structure, the invention has an important feature in that the fluorine-containing polymer is not uniformly distributed in the surface layer and there is formed a gradient of fluorine atom concentration in which fluorine atoms are more distributed in the surface than in the interior.

That is, based on the use of the fluorine-containing polymer, the packing member of the present invention exhibits liquid repellency against various kinds of liquids and, in this regard, is in common with the traditionally known packing members. In the packing member of the present invention, however, the fluorine-containing polymer is mixed into the base material polymer that is forming the surface of the packing member. Therefore, the fluorine-containing polymer is fixed to the surface of the packing member together with the base material polymer, and is effectively liberated from such an inconvenience that the fluorine-containing polymer is peeled or split off. Accordingly, the liquid repellency due to the fluorine-containing polymer is exhibited over extended periods of time maintaining stability.

In the packing member of the present invention, furthermore, the fluorine-containing polymer is present in the surface layer that is forming the surface of the packing member and, besides, in the fluorine-containing polymer, the fluorine atoms are distributed more in the surface than in the interior. Due to the above gradient of fluorine atoms, the present invention enables the fluorine-containing polymer to exhibit the liquid repellency to a maximum degree while using the expensive fluorine-containing polymer in a decreased amount.

Besides, according to the present invention, the above gradient of fluorine atoms can be easily formed by forming the packing member that has the surface layer of the blend of the base material polymer to which the fluorine-containing polymer is mixed and, thereafter, subjecting the surface layer to a migration treatment in which the surface layer is held at a temperature of not lower than 30°C but lower than 160°C for not shorter than one second. That is, through the migration treatment, the fluorine-containing polymer that has a small free energy in the surface gradually migrates from the interior toward the surface. As a result, the concentration of fluorine atoms becomes the highest in the surface and becomes lower toward the interior.

According to the present invention as described above, the packing member exhibits excellent liquid repellency and can be used in a variety of applications without the need of carrying out a cumbersome surface-roughening treatment such as etching or without employing any particular cumbersome means that drives up the cost, such as vapor deposition.

The invention can be adapted to the use, specifically, in a field of packing where the dripping of liquid in draining the content, adhesion and residence of liquid, and property of being well drained (fell down), could account for big problems. That is, the invention can be adapted to packing materials such as caps and containers or bottles, and to the use where the surfaces of, for example, a spout, a nozzle, a pipette and a dispenser come into contact with the liquid.

Further, when the invention is applied to a nozzle for ejecting eye lotions, the wettability decreases at a portion surrounding the ejection port. Therefore, there can be expected such an effect that a liquid droplet forms in a decreased diameter at the tip of the ejection port and can be dropped in a decreased amount.

### Brief Description of the Drawing:

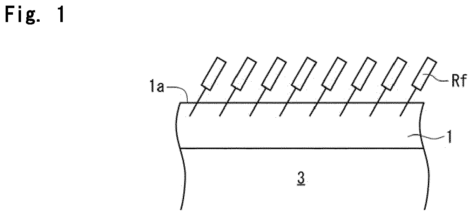

[Fig. 1] It is a model diagram illustrating the surface state of a packing member of the present invention.

### Modes for Carrying Out the Invention:

Referring to Fig. 1, the packing member of the present invention has a layer-laminated structure in which a surface layer 1 is formed on the surface of an underlying base material 3.

In the invention, the surface layer 1 is a blend of a base material polymer and a fluorine-containing polymer. In a surface 1a thereof, there are distributed fluorine-containing groups Rf of the fluorine-containing polymer as they are migrated to exhibit a large degree of liquid repellency against a variety of liquids.

As the fluorine-containing polymer, there can be exemplified polytetrafluoroethylene (PTFE), polychlorotrifluoroethylene (PCTFE), polyvinylidene fluoride (PVDF), polyvinyl fluoride (PVF), perfluoroalkoxyfluorine resin (PFA), ethylene tetrafluoride·propylene hexafluoride copolymer (FEP), ethylene·ethylene tetrafluoride copolymer (ETFE), and ethylene·chlorotrifluoroethylene copolymer (ECTFE). The invention particularly preferably uses the fluorine-containing acrylic resin and the fluorine-containing silicone resin from the standpoint of migration property and affinity to the base material polymer.

The above fluorine-containing acrylic resin is a fluorine-containing acrylic resin represented, for example, by the following formula:

Rf-CH₂-CH₂-OOC- (CX) =CH₂

wherein Rf is a fluorine-containing alkyl group such as perfluoroalkyl group, and X is a hydrogen atom or an alkyl group such as methyl group.

The invention preferably uses a polymer obtained by polymerizing the above fluorine-containing acrylic resin.

Further, the fluorine-containing silicone resin is a polyorganosiloxane represented, for example, by the following formula:

(RO)₂RfSiO-(RORfSiO)n-SiRf(OR)₂

wherein R is a hydrogen atom or an alkyl group such as methyl group, Rf is a fluorine-containing group such as fluoroalkyl group, and n is a number representing the degree of polymerization.

In the invention, the above-mentioned fluorine-containing polymer is said to be, preferably, the one in which the fluorine-containing group has a molecular weight which is, usually, less than C8 telomer from the standpoint of safety.

The base material polymer blended with the above fluorine-containing polymer is a resin that contains no fluorine. Use of this base material polymer makes it possible to secure a close adhesion to the base material 3 that lies under the surface layer 1. Besides, the fluorine-containing polymer distributed in the surface 1a as it has migrated can be firmly held in the surface layer 1.

As the base material polymer, there can be used either a thermoplastic resin or a thermosetting resin. However, the thermoplastic resin is preferred from the standpoint of, specifically, formability and migration property of the fluorine-containing polymer.

As the thermoplastic resin, there can be exemplified:
olefin resins such as low-density polyethylene, high-density polyethylene, polypropylene, poly 1-butene, poly 4-methyl-1-pentene or random or block copolymers of *α*-olefins, such as ethylene, propylene, 1-butene, 4-methyl-1-pentene, or cyclic olefin copolymers;
ethylene- vinyl copolymers such as ethylene- vinyl acetate copolymer, ethylene- vinyl alcohol copolymer and ethylene- vinyl chloride copolymer;
styrene resins such as polystyrene, acrylonitrile· styrene copolymer, ABS, and *α*-methylstyrene·styrene copolymer;
vinyl resins such as polyvinyl chloride, polyvinylidene chloride, vinyl chloride- vinylidene chloride copolymer, methyl polyacrylate, and methyl polymethacrylate;
polyamide resins such as nylon 6, nylon 6-6, nylon 6-10, nylon 11 and nylon 12;
polyester resins such as polyethylene terephthalate (PET), polybutylene terephthalate, polyethylene naphthalate and copolymerized polyesters thereof;
polycarbonate resin;
polyphenylene oxide resin; and
biodegradable resin such as polylactic acid.

It is, of course, allowable to use a blend of these thermoplastic resins, and a suitable thermoplastic resin may be used depending on the packing member that is used.

In the field of packing, for example, olefin resins and polyester resins can be preferably used.

In the invention, further, the blend of the base material polymer and the fluorine-containing resin that forms the surface layer 1, is, desirably, the one which contains the fluorine-containing polymer in an amount of 0.01 to 50 parts by mass, preferably, 0.05 to 10 parts by mass, more preferably, 0.05 to less than 3 parts by mass and, particularly preferably, 0.1 to 1 part by mass per 100 parts by mass of the base material polymer. Even when the fluorine-containing polymer is contained in unnecessarily large amounts, the liquid repellency is not improved any more. In this case, rather, the result becomes unsatisfactory from the standpoint of cost and, besides, the surface layer 1 tends to be easily peeled off the underlying base material 3. When the fluorine-containing polymer is contained in small amounts, on the other hand, the liquid repellency cannot be secured to a sufficient degree despite the migration treatment (heating treatment) is conducted as described later.

The surface layer 1 of the above blend forms a gradient of fluorine atom concentration through the migration treatment that will be described later and, therefore, the fluorine atoms are present at a higher concentration in the surface 1a than in the interior of the surface layer 1. Namely, as shown in Fig. 1, the fluorine-containing functional groups Rf possessed by the fluorine-containing polymer are so distributed as to be exposed on the side of the surface 1a. Accordingly, more excellent liquid repellency is exhibited than when the fluorine-containing polymer is homogeneously dispersed in the surface layer 1.

According to the invention, excellent liquid repellency can be confirmed by measuring the water contact angle. For example, as demonstrated in Examples appearing later, the surface 1a of the packing member of the invention exhibits a water contact angle of not less than 105 degrees (as measured at 23°C) and is forming a water-repellent surface.

In the invention, further, the underlying base material 3 may be made of a suitable material depending on the use of the packing member and may, for example, be made of plastic, paper or metal. From the standpoint of adhesiveness to the surface layer 1, however, the underlying base material 3 should, preferably, be made of plastic or paper. To secure adhesiveness to the surface layer 1, furthermore, the underlying base material 3 may be made of an adhesive resin that is known per se.

Further, the underlying base material 3 can be formed in a multilayered structure using, as an intermediate layer, a gas-barrier resin as represented by an ethylene-vinyl alcohol copolymer.

In the invention, from the standpoint of formability and close adhesion, it is most desired that the surface of the underlying base material 3 which is in contact with the surface layer 1 is made of an olefin resin or an ester resin and, specifically, the olefin resin.

According to the invention, the packing member, in principle, can be formed in a single-layer structure comprising the above-mentioned blend only without having the underlying base material 3 provided the surface layer 1 is formed by using the blend that contains the above-mentioned fluorine-containing polymer forming therein the gradient of fluorine atom concentration. In this case, however, the expensive fluorine-containing polymer must be used in an increased amount, which is a disadvantage in cost and posing large limitation in the use. It is, therefore, desired that the packing member has a layer-laminated structure forming the surface layer 1 on the underlying base material 3.

In the invention, the underlying base material 3 may assume a suitable form depending on the use, such as bottle, film, bag, cup, paper cup, container lid or spout. It may, further, assume such a form as nozzle, dispenser, pipette or pipette tip. Namely, the underlying base material 3 can be used as various members that come in contact with the liquid when it is in use, as a container or as a member to be fitted to the container, as a member for collecting a liquid upon sucking and for discharging the liquid, and as a member that is used being fitted thereto.

The above-mentioned surface layer 1 can be formed by preparing a coating solution by dissolving or dispersing, in a suitable volatile organic solvent, the above-mentioned blend of the base material polymer and the fluorine-containing polymer, applying the coating solution onto the surface of the underlying base material 3 that has been formed in a predetermined shape in advance, and drying the coting solution. Depending on the shape of the underlying base material 3 that is formed, the coating solution can be applied by spraying, brushing, dipping, screen-coating, or roll-coating.

Further, when the underlying base material 3 is a plastic, a resin composition is prepared by melting and kneading the base material polymer and the fluorine-containing polymer together, and subjecting the resin composition to an integral forming such as co-injection or co-extrusion.

The packing member having the surface layer 1 is obtained as described above and is then put to the migration treatment. There is thus obtained the packing member of the present invention having a predetermined fluorine concentration profile and a surface that is more excellent in liquid repellency.

In the invention, the migration treatment is carried out by holding at least the surface layer 1 at a temperature of not lower than 30°C but lower than 160°C for not shorter than one second.

If the migration treatment is carried out at a temperature of not lower than 160°C which temperature being higher than a temperature at which the olefin resin and the polyester resin undergo a thermal deformation, then the underlying base material also often undergoes a thermal deformation such as shrinking and wrinkling.

Further, if the migration treatment is carried out at a temperature lower than the above-mentioned temperature, the fluorine-containing polymer migrates insufficiently. In this case, even if the liquid repellency could be improved by the migration, a very extended period of time is required for the migration treatment, which, therefore, cannot be employed for industrial use.

Moreover, if the migration treatment is carried out for only a short period of time, the fluorine-containing polymer is migrated only insufficiently and improved liquid repellency cannot be expected. Upon conducting the heat treatment at a predetermined temperature for not shorter than one second as described above, it is allowed to obtain a water repellent surface having a water contact angle of not less than 105 degrees . For example, when the heat treatment is conducted by using a laser of a carbonic acid gas for which the plastic shows a high coefficient of absorption, the surface layer 1 is locally heated and the migration is accomplished despite the heat treatment is conducted for only one second.

Carrying out the migration treatment for unnecessarily long periods of time results in a decrease in the productivity. Concerning the treatment time, therefore, it is recommended to, first, conduct the testing on a laboratory scale to make sure the period of time in which the desired water contact angle of not less than 105 degrees and, specifically, about 110 degrees can be obtained to thereby avoid excess of treating time.

As described above, upon conducting the migration treatment as contemplated by the present invention, it is made possible to realize the water repellent surface having a water contact angle of not less than 105 degrees and, specifically, not less than 110 degrees. For example, it has been known that upon carrying out the treatment with a fluorine plasma, there can be obtained a water repellent surface due to the roughening of the surface and due to the introduction of the fluorine atoms . Without dare to carry out the treatment by using such an expensive apparatus, however, the present invention made it possible to realize the water repellent surface that is equivalent to that of when the treatment with the fluorine plasma is carried out.

Moreover, the packing member of the present invention does not have to be roughened for its surface by, for example, etching. Accordingly, the packing member features a smooth surface, e.g., an arithmetic mean roughness Ra of not more than 10 *µ*m on the surface layer 1a.

The packing member of the present invention exhibits very excellent repellency against a variety of liquids, and is effective in such uses where the formed surface 1a comes in contact with various liquids, e.g., in a field of packing like bottles, cups, pouches, glasses, container lids and spouts, effectively preventing dripping of liquid and adhesion of liquid.

Besides, the surface 1a of the packing member has a favorable liquid-dispelling property, and can be favorably adapted to such uses as nozzles, dispensers, pipettes, pipette tips, etc.

### EXAMPLES

### <Example 1>

### (Preparation of samples)

A low-density polyethylene resin (LJ8041 produced by Japan Polyethylene Co.) or a polypropylene (J246M produced by Prime Polymer Co.) blended with a fluorine-containing polymer (Asahi Guard AG-E060 produced by AGC Co. or DAIFREE FB962 produced by Daikin Industries, ltd.) in a predetermined amount, was melt-kneaded by using a kneader at a temperature higher than a melting point of the low-density polyethylene resin or the polypropylene.

The kneaded product was milled by using an electric mill and was pelletized.

The pellets were heated and pressed by using an electric hot press, and was formed into a film 100 *µ*m in thickness.

The thus formed film was dry-laminated on a biaxially stretched PET film 12 *µ*m in thickness via an adhesive to obtain samples which were then stored in an electric oven set at a predetermined temperature for a predetermined period of time to have the fluorine-containing polymer migrated.

### (Evaluation)

The samples before and after stored in the electric oven, i.e., the samples before and after the fluorine-containing polymer has migrated, were measured for their water contact angles under the following conditions.
*Liquid: pure water, 5 *µ*L
*Measuring apparatus: DropMaster 700 manufactured by Kyowa Interface Science Co., Ltd.

The samples before stored in the electric oven were measured for their surface roughness (arithmetic mean roughness Ra) by using a white color interferometer under the following conditions.
*Measuring apparatus: New View 7300 manufactured by ZYGO Co.
*Objective lens, magnifying power of 50
*Eyepiece, magnifying power of 2.0
*Long wavelength cut-off value *λ*c = 13.846155 *µ*m
*Short wavelength cut-off value *λ*s = 346.155 nm

### (Evaluated results)

The evaluated results were as shown in Table 1 below.

The low-density polyethylene resin bulk material exhibited water contact angle of 90° and, therefore, the water contact angles were evaluated in a manner as described below.
⊚: ≧ 110°
○: 105 to 109°
×: ≦ 104° or could not be measured due to thermal deformation

This Example proved that excellent liquid repellency could be expressed without the need of executing any particular means such as surface-roughening treatment or treatment with a plasma.

### <Comparative Example>

Samples were prepared under the same conditions as in Example above but storing them in the electric oven under a condition of 180°C for one minute to have the fluorine-containing polymer migrated.

The evaluated results were as shown in Table 1 below.

The samples shrunk greatly and wrinkled. Therefore, the water contact angle could not be measured.

**[Table 1]**

| | Conditions for preparing samples | | | | | Evaluated results | | |
|---|---|---|---|---|---|---|---|---|
| | Base material polymer | F-containing polymer | | Storage condition | | Ra (µm) | Water contact angle | |
| | | Trade name | Parts by mass | Temp. (°C) | Time | | Before stored | After stored |
| Ex. | polyethylene | Asahi Guard | 0.1 | 30 | 10 days | 8.1 | ○ | ○ |
| | | | | 60 | 96 hrs | 8.1 | ○ | ⊚ |
| | | | | 90 | 1 hr | 8.1 | ○ | ⊚ |
| | polypropylene | | | 125 | 30 min | 8.1 | ○ | ⊚ |
| | | | | 155 | 5 min | 8.1 | ○ | ⊚ |
| Comp. Ex. | | | | 180 | 1 min | 8.1 | ○ | × |
| Ex. | polyethylene | | 1.0 | 30 | 10 days | 8.1 | ○ | ○ |
| | | | | 60 | 96 hrs | 8.1 | ○ | ⊚ |
| | | | | 90 | 1 hr | 8.1 | ○ | ⊚ |
| | polypropylene | | | 125 | 30 min | 8.1 | ○ | ⊚ |
| | | | | 155 | 5 min | 8.1 | ○ | ⊚ |
| Comp. Ex. | | | | 180 | 1 min | 8.1 | ○ | × |
| Ex. | polyethylene | DAIFREE | 0.1 | 30 | 10 days | 8.1 | ○ | ○ |
| | | | | 60 | 96 hrs | 8.1 | ○ | ⊚ |
| | | | | 90 | 1 hr | 8.1 | ○ | ⊚ |
| | polypropylene | | | 125 | 30 min | 8.1 | ○ | ⊚ |
| | | | | 155 | 5 min | 8.1 | ○ | ⊚ |
| Comp. Ex. | | | | 180 | 1 min | 8.1 | ○ | × |
| Ex. | polyethylene | | 1.0 | 30 | 10 days | 8.1 | ○ | ○ |
| | | | | 60 | 96 hrs | 8.1 | ○ | ⊚ |
| | | | | 90 | 1 hr | 8.1 | ○ | ⊚ |
| | polypropylene | | | 125 | 30 min | 8.1 | ○ | ⊚ |
| | | | | 155 | 5 min | 8.1 | ○ | ⊚ |
| Comp. Ex. | | | | 180 | 1 min | 8.1 | ○ | × |

### <Example 2>

### (Preparation of a sample)

The low-density polyethylene resin (LJ8041) blended with 0.1 part by mass of the fluorine-containing polymer (AG-E060) was melt-kneaded by using the kneader at a temperature higher than the melting point of the polyethylene resin.

The kneaded product was milled by using the electric mill and was pelletized.

A cap mold was mounted on an injection-forming machine. The pellets were thrown into a hopper of the injection-forming machine and were injection-formed at a cylinder temperature set at 180°C into a sample cap.

Next, the sample cap was stored in the electric oven set at 90°C for one minute to have the fluorine-containing polymer migrated.

The sample cap was fitted to a PET bottle that has been filled in advance with 300 mL of a sauce (Delicious Sauce Tonkatsu produced by Kikkoman Co.) to obtain a sample bottle.

### (Evaluation· Results)

The sample bottle was tilted to pour out the sauce. The amount poured out was about 3 mL each time. The pouring out was repeated about 100 times until there was left no sauce.

The cap after the pouring out was observed to find no occurrence of liquid dripping and no liquid left on the pour-out portion.

This Example proved that excellent liquid repellency could be expressed without the need of executing any particular means such as surface-roughening treatment or treatment with a plasma.

### <Example 3>

### (Preparation of a sample)

The low-density polyethylene resin (LJ8041) blended with 1.0 part by mass of the fluorine-containing polymer (AG-E060) was melt-kneaded by using the kneader at a temperature higher than the melting point of the polyethylene resin.

The kneaded product was milled by using the electric mill and was pelletized.

A nozzle mold for eyedropper was mounted on the injection-forming machine. The pellets were thrown into the hopper of the injection-forming machine and were injection-formed at a cylinder temperature set at 180°C into a sample nozzle.

Next, the sample nozzle was stored in the electric oven set at 90°C for one minute to have the fluorine-containing polymer migrated.

The sample nozzle was fitted to a PET eyedropper that has been filled in advance with an eye lotion to obtain a sample eyedropper.

### (Evaluation· Results)

The sample eyedropper was held by hand in a manner that the nozzle was directed downward and perpendicularly. The sample eyedropper was then pushed to let the eye lotion dropped 100 times.

The amount that was dropped was measured by using the electronic Mettler. It was found that the amount dropped was 7 *µ*L on the average.

Further, a commercially available eye dropper on was also measured for its average amount of drop to be 30 to 50 *µ*L.

After the eye lotion is ejected from the ejection port, the surrounding of the ejection port becomes wet with the lotion over an expanded area to form a large liquid droplet. The liquid droplet starts dropping just as its own weight exceeds its force of adhesion to the surrounding of the ejection port. Therefore, a nozzle that wets well helps increase the amount of drop.

The nozzle according to this Example is imparted with excellent liquid repellency. It is, therefore, considered that the wettability decreases and the amount of drop decreases, too.

### <Example 4>

### (Preparation of a sample)

The polypropylene (J246M) blended with 0.5 parts by mass of the fluorine-containing polymer (FB962) was melt-kneaded by using the kneader at a temperature higher than the melting point of the polypropylene resin.

The kneaded product was milled by using the electric mill and was pelletized.

The pellets were heated and pressed by using the electric hot press, and was formed into a film 60 *µ*m in thickness.

The thus formed film was dry-laminated on a 7 *µ*m-thick aluminum foil and a 12 *µ*m-thick biaxially stretched PET film via an adhesive. Thereafter, the two pieces of film were so overlapped that their polypropylene resin surfaces faced to each other, and the three sides were heat-sealed to obtain a sample pouch.

The pouch was filled with a curry (Curry House's curry <medium spicy> produced by House Foods Co.) and, thereafter, the remaining one side was heat-sealed to obtain a sample.

The sample was heated in an autoclave set at 125°C for 30 minutes, and was then left to naturally cool down to normal temperature.

### (Evaluation· Results)

After the temperature of the sample has returned to normal temperature, one side that has been heat-sealed was cut open to pour the curry out.

After the curry was poured out, the inner surfaces of the sample were observed with the eye. There was left no curry and even the coloring matter of the curry could not be seen.

This Example proved that excellent liquid repellency could be expressed without the need of executing any particular means such as surface-roughening treatment or treatment with a plasma.

### Description of Reference Numerals:

- 1 :: surface layer
- 1a :: surface of the packing member
- 3 :: underlying base material

## Claims

1. A packing member having a liquid repellent surface **characterized by** having a surface layer of a blend of a base material polymer mixed with a fluorine-containing polymer, said surface layer forming a gradient of fluorine atom concentration in which fluorine atoms are more distributed in the surface than in the interior.

2. The packing member according to claim 1, wherein said surface shows a water repellency of not less than 105 degrees in terms of the water contact angle.

3. The packing member according to claim 1, wherein said surface is a smooth surface having an arithmetic mean surface roughness (Ra) of not more than 10 *µ*m.

4. The packing member according to claim 1, wherein said fluorine-containing polymer is a fluorine-containing acrylic resin or a fluorine-containing silicone resin.

5. The packing member according to claim 1, wherein said base material polymer is a polyolefin or a polyester.

6. The packing member according to claim 1, wherein said blend contains the fluorine-containing polymer in an amount of 0.01 to 50 parts by mass per 100 parts by mass of the base material polymer.

7. The packing member according to claim 1, wherein the surface layer of said blend has a layer-laminated structure formed on at least one surface of the underlying base material.

8. The packing member according to claim 7, wherein said packing member is a nozzle for ejecting an eye lotion.

9. The packing member according to claim 7, wherein said packing member is a cap.

10. The packing member according to claim 7, wherein said packing member is a pouch.

11. A method of producing a packing member having a liquid repellent surface, **characterized by** using a blend of a base material polymer mixed with a fluorine-containing polymer to obtain a packing member whose surface is made of said blend and, thereafter, subjecting the surface of said packing member to a migration treatment in which the surface of said packing member is held at a temperature of not lower than 30°C but lower than 160°C for not shorter than one second.
